# EUROPEAN PATENT APPLICATION

(11) **EP 4 769 787 A1**
(43) Date of publication of application: **01.07.2026**
(21) Application number: 25867233.6
(22) Date of filing: 25.09.2025
(51) Int. Cl.: H01M 50/466

(54) **SEPARATOR, ELECTRODE LAMINATE INCLUDING SEPARATOR, AND SECONDARY BATTERY INCLUDING ELECTRODE LAMINATE**

(30) Priority: 31.10.2024 KR 20240153027
(71) Applicant: LG ENERGY SOLUTION, LTD., Seoul 07335 (KR)
(72) Inventor: KIM, Do Hyeon, Daejeon 34122 (KR); JEONG, Min Ji, Daejeon 34122 (KR); PARK, Jong Pil, Daejeon 34122 (KR)
(74) Representative: Goddar, Heinz J.
(86) International application number: PCT/KR2025/015052
(87) International publication number: WO 2026/095370

(57) **Abstract**

A secondary battery according to the present disclosure includes a first electrode, a second electrode, the first electrode and the second electrode being stacked in an alternating manner along a stack direction, and a separator configured to separate the first electrode from the second electrode, wherein the separator includes a first separator portion located between the first electrode and the second electrode, a second separator portion located opposite the first separator portion with respect to the first electrode, and a connection portion connecting the first separator portion to the second separator portion and covering an end portion of the first electrode, and wherein the connection portion has a gas vent hole having a larger length in a length direction parallel to an extension direction of the end portion of the first electrode than a width, the gas vent hole having a rounded corner.

## Description

### TECHNICAL FIELD

### CROSS-REFERENCE TO RELATED APPLICATIONS

This application is based on and claims priority from Korean Patent Application No. 10-2024-0153027 filed on October 31, 2024, the disclosure of which is incorporated herein in its entirety by reference.

### TECHNICAL FIELD

The present disclosure relates to a separator, an electrode stack including the separator and a secondary battery including the electrode stack. More particularly, the present disclosure relates to a separator configured to allow for easy gas venting, an electrode stack including the separator and a secondary battery including the electrode stack.

### BACKGROUND ART

In general, a secondary battery designed to produce electricity includes an electrode stack including a plurality of electrodes and a separator located between each electrode, and a battery case accommodating the electrode stack.

The process of manufacturing the secondary battery includes a degassing process. The degassing process is performed after an activation process of activating the battery by pre-charging and pre-discharging the electrode stack housed in the battery case. More specifically, during the activation process, gas is produced by reactions between an electrolyte solution and the electrode, and the degassing process is a process for removing the gas produced in the activation process. In case where the gas is not removed from the secondary battery, the gas impedes the movement of ions, for example, lithium ions between the electrodes, resulting in a smaller amount of electricity produced.

When the separator includes a plurality of sheets that is separated from each other, it may be easy for gas to move between adjacent separators. However, when adjacent separators are connected to each other or a single separator separates the plurality of electrodes from each other, it may be difficult for gas to move to a part of the separator. In other words, gas trapping between the separator and the electrode may occur.

The above-described background is information possessed or acquired by the inventor in the process of arriving at the present disclosure, and is not necessarily the prior art published and known to the general public before the time of filing.

### DISCLOSURE

### TECHNICAL PROBLEM

The present disclosure is designed to solve the above-described problems, and therefore the present disclosure is directed to allowing for easy gas movement through a separator to prevent gas trapping.

The technical problems of the present disclosure to be solved are not limited to the above-mentioned technical problems, and these and other technical problems will be clearly understood by persons having ordinary skill in the technical field pertaining to the present disclosure from the following description.

### TECHNICAL SOLUTION

A secondary battery according to an embodiment of the present disclosure includes a first electrode, a second electrode, the first electrode and the second electrode being stacked in an alternating manner along a stack direction, and a separator configured to separate the first electrode from the second electrode, wherein the separator includes a first separator portion located between the first electrode and the second electrode, a second separator portion located opposite the first separator portion with respect to the first electrode, and a connection portion connecting the first separator portion to the second separator portion and covering an end portion of the first electrode, and wherein the connection portion has a gas vent hole having a larger length in a length direction parallel to an extension direction of the end portion of the first electrode than a width, the gas vent hole having a rounded corner.

An end portion of the gas vent hole in the length direction may curve inward as it goes outward in a width direction.

The gas vent hole may include a plurality of gas vent holes, and the plurality of gas vent holes may be arranged along the extension direction of the end portion of the first electrode.

The connection portion may include a bridge portion between the plurality of gas vent holes, the bridge portion connecting the first separator portion to the second separator portion.

The length of the gas vent hole with respect to the extension direction of the first electrode may be larger than a length of the bridge portion with respect to the extension direction of the first electrode.

A length of the bridge portion with respect to the extension direction of the first electrode may be equal to or less than 1/10 of a length of the connection portion with respect to the extension direction of the first electrode.

A width of a connected part of the bridge portion and the first separator portion or the second separator portion may be larger than a width located between the first separator portion and the second separator portion.

The bridge portion may include a space forming portion facing the first electrode and spaced apart from the first electrode to form a gas movement space therebetween.

The secondary battery may further include an end bridge portion located at an outer side with respect to an arrangement direction of the plurality of gas vent holes, and a width of the end bridge portion may be larger than a width of the bridge portion.

The gas vent hole may be bent toward the first separator portion or the second separator portion from the end portion of the first electrode.

The gas vent hole may have a larger width than a thickness of the end portion of the first electrode.

The gas vent hole may overlap the first electrode with respect to the stack direction such that the first electrode is exposed with respect to the stack direction.

The gas vent hole may be configured to be restricted from overlapping the second electrode to prevent physical contact between the first electrode and the second electrode.

The secondary battery may include an accommodation portion accommodating the first electrode, the second electrode and the separator, and a side portion extending from one side of the accommodation portion and configured to be sealed, and the gas vent hole may be configured to face the side portion.

The connection portion may be defined as a first connection portion, the first connection portion may be connected to an end of the first separator portion and an end of the second separator portion adjacent to the end of the first separator portion, and the separator may further include a third separator portion located opposite the first separator portion with respect to the second electrode, and a second connection portion connected to an opposite end of the second separator portion and an end of the third separator portion adjacent to the opposite end of the second separator portion.

An electrode stack according to an embodiment of the present disclosure includes a first electrode, a second electrode, the first electrode and the second electrode being stacked in an alternating manner along a stack direction, a first separator portion located between the first electrode and the second electrode, a second separator portion located opposite the first separator portion with respect to the first electrode, and a connection portion connecting the first separator portion to the second separator portion and covering an end portion of the first electrode, wherein the connection portion has a gas vent hole that allows gas to move, and overlaps any one of the first electrode and the second electrode with respect to the stack direction and is prevented from overlapping the other one.

The gas vent hole may have a larger length in a length direction parallel to an extension direction of the end portion of the first electrode than a width, and have a rounded corner.

An end portion of the gas vent hole in the length direction may curve inward as it goes outward in a width direction.

The gas vent hole may include a plurality of gas vent holes, and the plurality of gas vent holes may be arranged along an extension direction of the end portion of the first electrode.

A separator according to an embodiment of the present disclosure includes a first separator portion configured to face a first surface of a first electrode, a second separator portion configured to face a second surface opposite to the first surface of the first electrode, and a connection portion configured to connect the first separator portion to the second separator portion, wherein the connection portion includes a plurality of gas vent holes, each having a larger length in a length direction than a width, a bridge portion formed between the plurality of gas vent holes, and an end bridge portion formed outside of the plurality of gas vent holes, wherein the length of the gas vent hole is larger than a length of the bridge portion, and wherein a length of the end bridge portion is larger than the length of the bridge portion.

### ADVANTAGEOUS EFFECTS

The separator according to an embodiment of the present disclosure has the gas vent hole, thereby preventing gas trapping and allowing for easy gas movement.

The gas vent hole formed in the separator according to an embodiment of the present disclosure has the rounded corner, thereby preventing cracks in the corner.

The plurality of gas vent holes formed in the separator according to an embodiment of the present disclosure is formed with a larger length than the bridge portion located between the plurality of gas vent holes, thereby allowing for easier gas venting.

The gas vent hole formed in the separator according to an embodiment of the present disclosure overlaps a part of the first electrode and does not overlap the second electrode adjacent to the first electrode, thereby allowing for easy gas venting and preventing short circuits between the first electrode and the second electrode.

The electrode stack and the secondary battery according to an embodiment of the present disclosure include the separator, and thus, may have the above-described effects.

The effects that may be obtained from the present disclosure are not limited to the above-mentioned effects, and these and other effects will be clearly understood by persons having ordinary skill in the technical field pertaining to the present disclosure from the following description.

### BRIEF DESCRIPTION OF THE DRAWINGS

FIG. 1 is an assembly diagram of a secondary battery according to a first embodiment of the present disclosure.
FIG. 2 is a cross-sectional view showing a battery case shown in FIG. 1 while in a contact state.
FIG. 3 is a side view showing an electrode assembly shown in FIG. 2 when viewed from the side.
FIG. 4 is a cross-sectional view showing a first electrode, a second electrode and a separator shown in FIG. 3.
FIG. 5 is a perspective view showing the first electrode, the second electrode and the separator shown in FIG. 4.
FIG. 6 is a front view showing the first electrode, the second electrode and the separator shown in FIG. 5 when viewed from top.
FIG. 7 is a perspective view showing the separator shown in FIG. 6.
FIG. 8 is an enlarged view showing an area where a gas vent hole shown in FIG. 6 is located.
FIG. 9 is an enlarged view showing a separator according to a second embodiment of the present disclosure.
FIG. 10 is an enlarged view showing a separator according to a third embodiment of the present disclosure.
FIG. 11 is an enlarged view showing a separator according to a fourth embodiment of the present disclosure.

### BEST MODE

Hereinafter, the exemplary embodiments of the present disclosure will be described in sufficient detail with reference to the accompanying drawings to enable persons having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the subject matter of the present disclosure is omitted, and in affixing the reference numerals to the elements in each drawing, the identical or similar reference numerals are affixed to the identical or similar elements throughout the specification.

Additionally, it should be understood that the terms or words used in the specification and the appended claims should not be construed as being limited to general and dictionary meanings, and rather, should be interpreted based on the meanings and concepts corresponding to the technical aspects of the present disclosure on the basis of the principle that the inventor is allowed to define the terms appropriately for the best explanation.

It should be understood that various embodiments of the present disclosure and the terms used herein are not intended to limit the technical features of the present disclosure to particular embodiments, and include a variety of changes, equivalents or substitutes of the corresponding embodiments.

In relation to the description of the drawings, for the similar or related elements, the similar reference numerals may be used.

The singular form of a noun corresponding to an item may include one or more items unless otherwise indicated by the context.

Each of phrases such as "A or B", "at least one of A and B", "at least one of A or B", "A, B or C", "at least one of A, B and C" and "at least one of A, B or C" as used herein may include any one of the items listed together with the corresponding phrase or all possible combinations of them.

The term "and/or" includes a combination of a plurality of related stated elements or any of the plurality of related stated elements.

The terms such as "first", "second" and so on may be simply used to distinguish the corresponding element from the corresponding other embodiment, and are not intended to limit the corresponding elements in another aspect (for example, importance or order).

When a certain (for example, first) element is referred to as being "coupled" or "connected" to another (for example, second) element with or without the term "functionally" or "through communication", the element may be connected to the other element directly (for example, wiredly), wirelessly or through a third element.

The term "comprise", "include" or "have" indicates the presence of the stated features, figures, steps, operations, elements, components or a combination of them, and does not preclude the presence or addition of one or more other features, figures, steps, operations, elements, components or a combination of them.

When an element is referred to as "being connected to", "being coupled to", "being supported by" or "contacting" another element, this includes not only direct connection, coupling, support or contact of the elements but also indirect connection, coupling, support or contact through a third element.

When an element is referred to as being located "on" another element, the element can contact the other element and intervening elements may be present.

Meanwhile, the terms "up-down direction", "lower" and "front-rear direction" as used herein are defined on the basis of the drawings, and the shape and location of each element is not limited by these terms.

Hereinafter, the embodiments according to the present disclosure will be described in detail with reference to the accompanying drawings.

### First embodiment

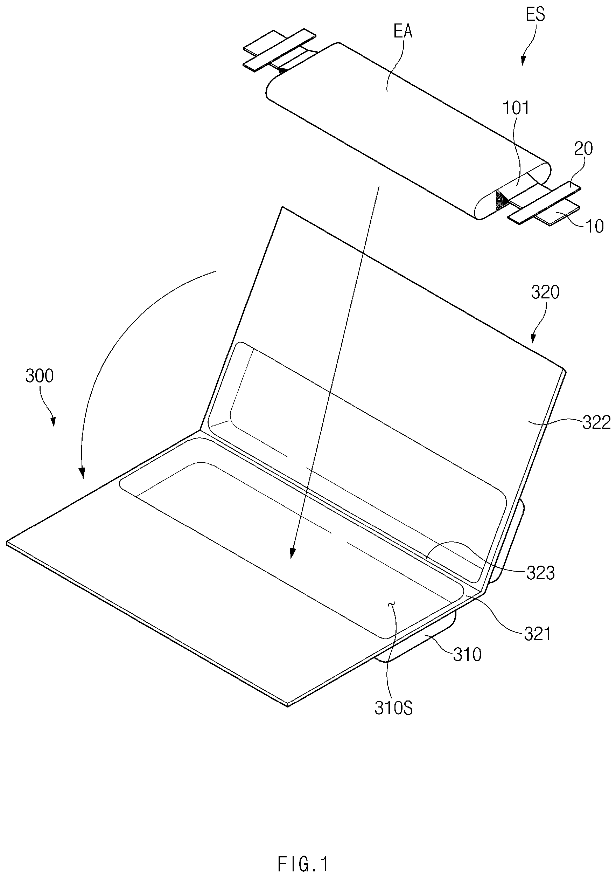

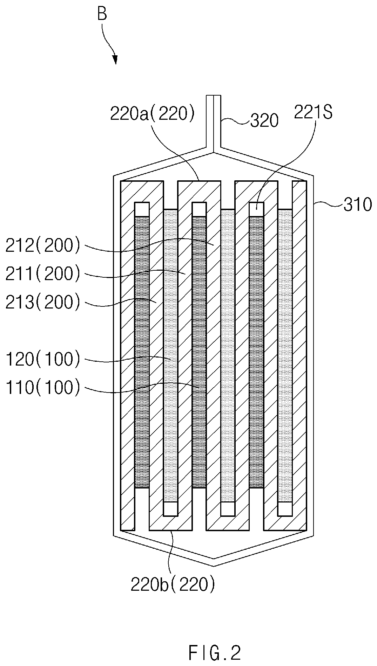

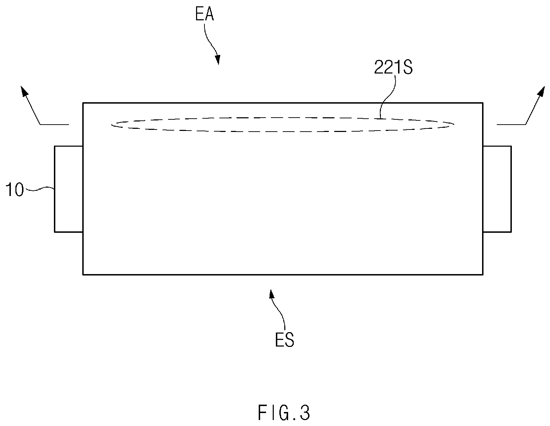

FIG. 1 is an assembly diagram of a secondary battery B according to a first embodiment of the present disclosure. FIG. 2 is a cross-sectional view showing a battery case 300 shown in FIG. 1 while in a contact state. FIG. 3 is a side view showing an electrode assembly EA shown in FIG. 2 when viewed from the side.

As shown in FIGS. 1 to 3, the secondary battery B according to the first embodiment of the present disclosure will be described.

As shown in FIG. 1, the secondary battery B may be provided to generate electricity. The secondary battery B may include the electrode assembly EA and the battery case 300 configured to hold the electrode assembly EA. The secondary battery B may come in different types depending on the type of the battery case 300. More specifically, the battery case 300 may be a pouch, and the secondary battery B may be a pouch type. However, when necessary, the secondary battery B may be prismatic or cylindrical in shape.

The electrode assembly EA may include an electrode stack ES formed by stacking electrodes 100, an electrode lead 10 connected to a plurality of electrode tabs 101 included in each electrode 100, and a lead film 20 coupled to the electrode lead 10. In this instance, the electrode assembly EA may include a separator 200 to separate the plurality of electrodes 100 as shown in FIG. 2. The separator 200 may be formed as a single piece and pass between the plurality of electrodes 100 in a zigzag pattern as shown in FIG. 2. The zigzag separator 200 has an advantage of reducing short circuit risks between the adjacent electrodes 100, thereby forming the stable secondary battery B. However, when necessary, the separator 200 may include a plurality of separators 200, and each separator 200 may be located between the adjacent electrodes 100.

The battery case 300 may include an accommodation portion 310 configured to hold the electrode assembly EA and a side portion 320 extending from the accommodation portion 310. The accommodation portion 310 may be formed by pressing a pouch to stretch it. The accommodation portion 310 may be recessed to form a battery accommodation space 310S inside. In this instance, the accommodation portion 310 may include a pair of accommodation portions, so the electrode stack ES may be placed between the pair of accommodation portions 310. The side portion 320 may include a folding portion 323 located between the pair of accommodation portions 310, and a degas sealing portion 322 extending in a direction away from the outer edge of each of the pair of accommodation portions 310, and/or a lead sealing portion 321 extending in a direction perpendicular to the degas sealing portion 322 from each of the pair of accommodation portions 310. In this instance, when necessary, the lead sealing portion 321 may refer to the component extending from an extension point that is different from the extension point of the degas sealing portion 322 in the extension direction of the degas sealing portion 322. The battery case 300 may be folded at the folding portion 323 such that the pair of accommodation portions 310 face each other. Accordingly, the battery case 300 may be configured such that the lead sealing portions 321 contact each other, and the degas sealing portions 322 contact each other. The lead film 20 may be located at the location of contact of the lead sealing portions 321, and the electrode lead 10 may be configured to extend outward from the battery case 300.

The secondary battery B having finished the above-described process may be completed through the following process.

After the battery case 300 accommodating the electrode assembly EA is folded, the lead sealing portions 321 that face each other may be sealed by joining together by heat and pressure. After the lead sealing portions 321 are sealed, the electrolyte solution may be fed into the battery accommodation space 310S between the end portions of the degas sealing portions 322 that are not yet sealed. After sealing parts of the degas sealing portions 322, an activation process that performs pre-charging and pre-discharging may be performed. Accordingly, gas may be produced by reactions between the electrode 100 and the electrolyte solution. To remove the produced gas, a hole may be formed in the degas sealing portion 322 and a negative pressure may be provided to vent the gas. Subsequently, a trimming process may be performed to cut the degas sealing portion 322 having the hole, and a side folding process may be performed to reduce the width of the degas sealing portion 322 remaining after the cutting.

In this instance, as shown in FIG. 3, gas to be removed in the degassing process may be trapped between the separator 200 and the electrode 100. In case where the gas is not removed from the secondary battery B, the gas may impede the movement of ions, for example, lithium ions between the electrodes 100, resulting in a smaller amount of electricity generated. Further, in the event of gas trapping, the separator 200 located adjacent to the trapped gas may not be properly filled with the electrolyte solution. The separator 200 that has not been permeated by the electrolyte solution may not properly act as a movement passage of ions. As shown in the drawing of the electrode assembly EA of FIG. 3, the trapped gas may be located at the upper part of the inside of the electrode assembly EA. Because the gas is lighter than the electrolyte solution, the gas tends to move upward in the electrolyte solution, and when the movement is impeded by the separator 200, the gas may be trapped. In this instance, as indicated by the arrows on the left and right sides of the electrode assembly EA shown in FIG. 3, when gas venting is only done through the end portion of the separator 200, gas trapping at the upper part of the inside of the separator 200 may impede the movement of ions.

Hereinafter, the separator 200 for solving the above-described problem will be described. However, prior to the description, under the assumption that the separator 200 has a zigzag shape as shown in FIG. 2, the detailed structure of the separator 200 will be described. The electrodes 100 separated by the separator 200 may include a first electrode 110 and a second electrode 120, and the first electrode 110 and the second electrode 120 may face each other and be stacked in an alternating manner along the stack direction. The stack direction may be the left-right direction on the basis of FIG. 2. Here, the first electrode 110 may refer to a negative electrode, and the second electrode 120 may refer to a positive electrode. However, when necessary, the first electrode 110 may be a positive electrode, and the second electrode 120 may be a negative electrode. As shown in FIG. 2, the separator 200 may include a first separator portion 211 located between the first electrode 110 and the second electrode 120, a second separator portion 212 located opposite the first separator portion 211 with respect to the first electrode 110, and a third separator portion 213 located opposite the first separator portion 211 with respect to the second electrode 120. Further, the separator 200 may include a first connection portion 220a connected to one end of the first separator portion 211 and one end of the second separator portion 212 adjacent to one end of the first separator portion 211, and a second connection portion 220b connected to the other end of the second separator portion 212 and one end of the third separator portion 213 adjacent to the other end of the second separator portion 212. In this instance, when the first connection portion 220a is indicated singly, it may be referred to as a connection portion 220, and in this case, the connection portion 220 may be defined as connecting the first separator portion 211 to the second separator portion 212 and covering the end portion of the first electrode 110. Hereinafter, the structure of the separator 200 that is easy to vent gas will be described in detail with reference to the drawings.

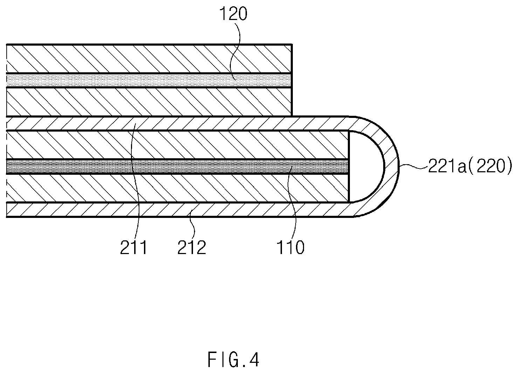

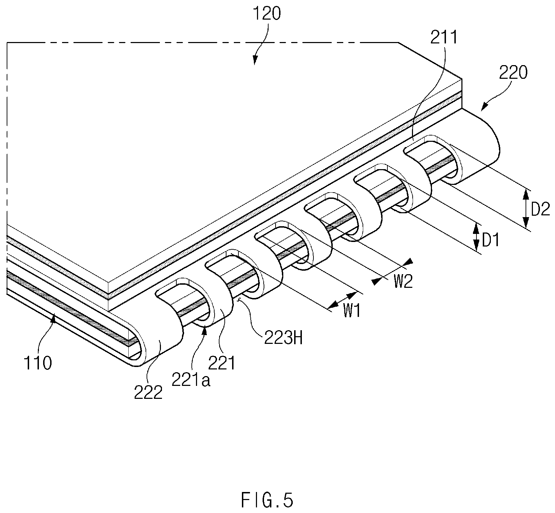

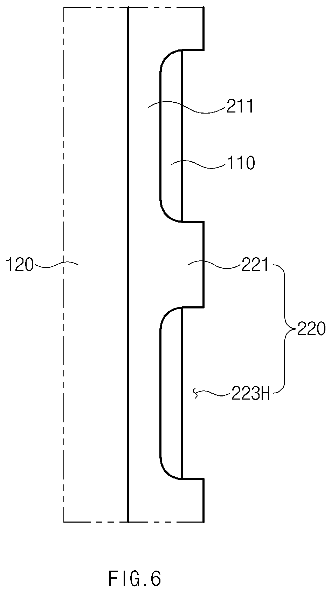

FIG. 4 is a cross-sectional view showing the first electrode 110, the second electrode 120 and the separator 200 shown in FIG. 3. FIG. 5 is a perspective view showing the first electrode 110, the second electrode 120 and the separator 200 shown in FIG. 4. FIG. 6 is a front view showing the first electrode 110, the second electrode 120 and the separator 200 shown in FIG. 5 when viewed from top.

The structure of the separator 200 that is easy to vent gas according to the first embodiment of the present disclosure will be described with reference to FIGS. 4 to 6.

As shown in FIG. 5, the connection portion 220 may have a plurality of gas vent holes 223H. However, the connection portion 220 may have a single gas vent hole 223H, when necessary. The plurality of gas vent holes 223H may be arranged along the extension direction of the end portion of the first electrode 110. More specifically, the extension direction of the end portion of the first electrode 110 may be the front-rear direction on the basis of FIG. 5. As shown in FIG. 5, there may be six gas vent holes 223H along the front-rear direction. However, the number of gas vent holes 223H may be changed as needed.

Additionally, where necessary, the first electrode 110 may be understood as the second electrode 120 instead. It may be understood that the description made on the basis of the first electrode 110 in this disclosure is applied to the second electrode 120 or simultaneously applied to the first electrode 110 and the second electrode 120.

The gas vent hole 223H may be formed with a larger length D1 in the length direction parallel to the extension direction of the end portion of the first electrode 110 than a width D2. The connection portion 220 may include a bridge portion 221 between the plurality of gas vent holes 223H. The bridge portion 221 may connect the first separator portion 211 to the second separator portion 212. The length D1 of the gas vent hole 223H with respect to the extension direction of the first electrode 110 may be larger than a length W2 of the bridge portion 221 with respect to the extension direction of the first electrode 110. Accordingly, with respect to the extension direction of the first electrode 110, the length occupied by the gas vent hole 223H may be larger than that of the bridge portion 221. More specifically, for example, the length of the bridge portion 221 with respect to the extension direction of the first electrode 110 may be equal to or less than 1/10 of the length of the connection portion 220 with respect to the extension direction of the first electrode 110. Accordingly, compared to the bridge portion 221 having a larger length than the gas vent hole 223H, improved gas venting through the extension portion may be achieved.

The gas vent hole 223H may be formed with a rounded corner. Accordingly, the gas vent hole 223H may be formed in a shape that is substantially close to an elliptical or oval shape. In other words, the end portion of the gas vent hole 223H in the length direction may curve inward as it goes outward in the width direction. In case where the corner of the gas vent hole 223H is formed at an angle, stress may be concentrated on the corner portion, making cracking or tearing more likely in the corner portion. Like the first embodiment of the present disclosure, the rounded corner may distribute stress, thereby reducing the likelihood of tearing or cracking. Further, a width W1 of a connected part of the bridge portion 221 and the first separator portion 211 or the second separator portion 212 may be larger than the width W2 located between the first separator portion 211 and the second separator portion 212. The connected part of the bridge portion 221 and the first separator portion 211 or the second separator portion 212 has a large change in width and is susceptible to stress concentration, but due to its large thickness, the likelihood that damage will occur to the bridge portion 221 may be reduced.

The separator 200 may further include an end bridge portion 222 located at the outer side with respect to the arrangement direction of the plurality of gas vent holes 223H. The width of the end bridge portion 222 may be larger than the width W2 of the bridge portion 221. The end bridge portion 222 having one free end may have low resistance to damage. Further, because the end bridge portion 222 is located at the outer position than the bridge portion 221, the likelihood that impacts will be applied to the end bridge portion 222 may be higher than the bridge portion 221. Accordingly, the end bridge portion 222 may need to have higher resistance to damage than the bridge portion 221. The end bridge portion 222 according to the first embodiment may be formed with the large width to resist damage strongly. Further, in the event of damage to the end bridge portion 222, the bridge portion 221 located closest to the end bridge portion 222 becomes an end portion again and is exposed to impacts, and to prevent damage to the bridge portion 221, it may be crucial to prevent damage to the end bridge portion 222.

The bridge portion 221 may include a space forming portion 221a facing the first electrode 110 and spaced apart from the first electrode 110 to form a gas movement space 221S therebetween. The space forming portion 221a may have an arc shape in cross section as shown in FIG. 4. The gas vent hole 223H may act as a movement passage of gas that may be trapped in the gas movement space 221S.

The gas vent hole 223H may be bent toward the first separator portion 211 and the second separator portion 212 from the end portion of the first electrode 110 as shown in FIG. 5. However, when necessary, only a portion of the gas vent hole 223H close to the first separator portion 211 may be bent, or only a portion of the gas vent hole 223H close to the second separator portion 212 may be bent. Further, the bridge portion 221 may be bent toward the first separator portion 211 or the second separator portion 212 from the end portion of the first electrode 110.

The gas vent hole 223H may have a larger width than the thickness of the end portion of the first electrode 110. Accordingly, the bent gas vent hole 223H may overlap the first electrode 110 with respect to the stack direction such that the first electrode 110 is exposed with respect to the stack direction. In this instance, as shown in FIG. 4, the first electrode 110 may protrude beyond the second electrode 120. The gas vent hole 223H may be configured to be restricted from overlapping the second electrode 120 in order to prevent physical contact between the first electrode 110 and the second electrode 120. That is, as shown in FIG. 6, the gas vent hole 223H may not extend beyond the second electrode 120. In other words, the connection portion 220 may allow gas to move, and may overlap any one of the first electrode 110 and the second electrode 120 with respect to the stack direction and be prevented from overlapping the other one.

As shown in FIG. 2, the gas vent hole 223H may be configured to face the side portion 320. Because a portion of the separator 200 facing the side portion 320 is vulnerable to gas trapping, the gas vent hole 223H may be formed correspondingly. In other words, on the basis of FIG. 2, the gas vent hole 223H may be located at the upper part of the electrode stack ES. However, when necessary, the gas vent hole 223H may be located at the upper and lower parts of the electrode stack ES.

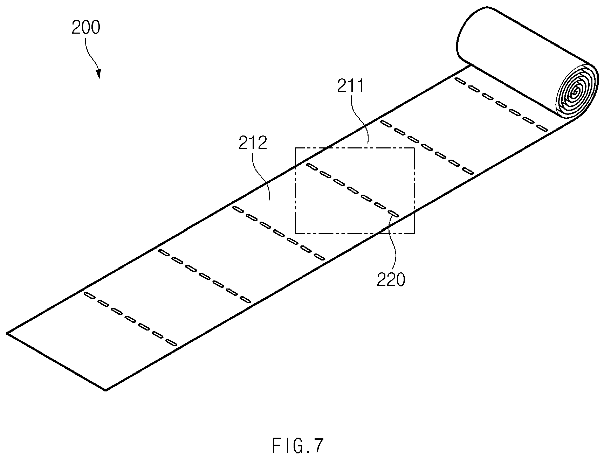

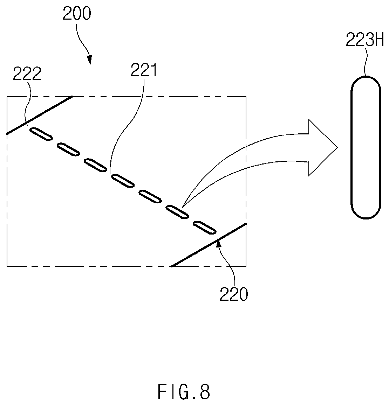

FIG. 7 is a perspective view showing the separator 200 shown in FIG. 6. FIG. 8 is an enlarged view showing an area where the gas vent hole 223H shown in FIG. 6 is located.

The separator 200 according to the first embodiment of the present disclosure will be described with reference to FIGS. 7 and 8.

The separator 200 may be wound as shown in FIG. 7. The separator 200 may include the first separator portion 211 configured to face a first surface of the first electrode 110, the second separator portion 212 configured to face a second surface opposite to the first surface of the first electrode 110, and the connection portion 220 configured to connect the first separator portion 211 to the second separator portion 212. The connection portion 220 may include the plurality of gas vent holes 223H, each having a larger length in the length direction than the width, the bridge portion 221 formed between the plurality of gas vent holes 223H, and the end bridge portion 222 formed outside of the plurality of gas vent holes 223H. The length of the gas vent hole 223H may be larger than the length of the bridge portion 221. The length of the end bridge portion 222 may be larger than the length of the bridge portion 221.

Hereinafter, other embodiment than the first embodiment will be described. The common description with the first embodiment is omitted, and the other embodiment will be described based on differences. In other words, it is obvious that if any, details not described in the other embodiment may be supplemented through the description of the first embodiment.

### Second embodiment

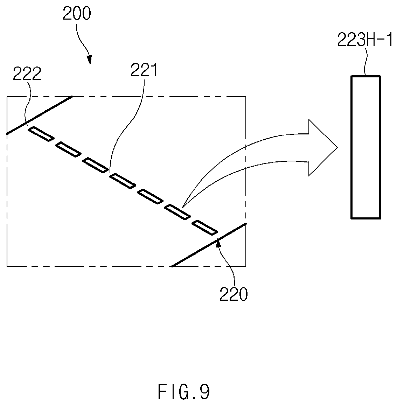

FIG. 9 is an enlarged view showing the separator 200 according to a second embodiment of the present disclosure.

The gas vent hole 223H-1 according to the second embodiment of the present disclosure will be described with reference to FIG. 9.

The second embodiment is different from the first embodiment in that the shape of the gas vent hole 223H-1 is different.

The gas vent hole 223H-1 may have a substantially rectangular shape. The gas vent hole 223H-1 is more likely to crack than the gas vent hole 223H of the first embodiment, but is easier to manufacture.

### Third embodiment

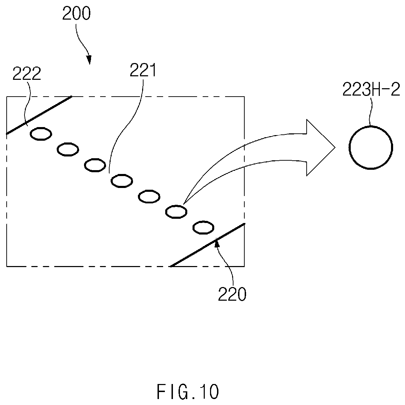

FIG. 10 is an enlarged view showing the separator 200 according to a third embodiment of the present disclosure.

The gas vent hole 223H-2 according to the third embodiment of the present disclosure will be described with reference to FIG. 10.

The third embodiment is different from the first embodiment in that the shape of the gas vent hole 223H-2 is different.

The gas vent hole 223H-2 may be substantially circular in shape. The circular gas vent hole 223H-2 distributes stress evenly, and has high resistance to cracks. However, to vent gas easily, a larger number of gas vent holes 223H-2 than the first embodiment is needed.

### Fourth embodiment

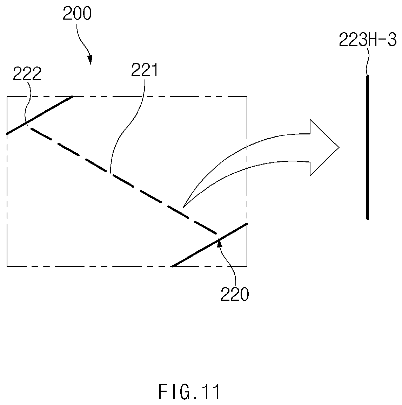

FIG. 11 is an enlarged view showing the separator 200 according to a fourth embodiment of the present disclosure.

The gas vent hole 223H-3 according to the fourth embodiment of the present disclosure will be described with reference to FIG. 11.

The fourth embodiment is different from the first embodiment in that the shape of the gas vent hole 223H-3 is different.

The gas vent hole 223H-3 may have a shape of a cutting line despite its name. When gas is vented, the cut is opened, making gas venting easy.

Unless expressly stated otherwise, the disclosed embodiments may be combined with other embodiments. Alternatively, in combining an embodiment with other embodiment, any combination of embodiments may be made unless expressly limited. It should be understood that such a combination of embodiments is disclosed in the present disclosure.

Although the present disclosure has been hereinabove described with regard to certain embodiments and drawings, the present disclosure is not limited thereto, and the present disclosure may be embodied in different forms by persons having ordinary skill in the technical field pertaining to the present disclosure within the technical aspects of the present disclosure and the appended claims and their equivalents.

### [List of Reference Numerals]

B: Secondary battery
EA: Electrode assembly
10: Electrode lead
20: Lead film
ES: Electrode stack
100: Electrode
101: Electrode tab
110: First electrode
120: Second electrode
200: Separator
211: First separator portion
212: Second separator portion
213: Third separator portion
220: Connection portion
220a: First connection portion
220b: Second connection portion
221: Bridge portion
221a: Space forming portion
221S: Gas movement space
222: End bridge portion
223H, 223H-1, 223H-2, 223H-3: Gas vent hole
300: Battery case
310: Accommodation portion
310S: Battery accommodation space
320: Side portion
321: Lead sealing portion
322: Degas sealing portion
323: Folding portion

## Claims

1. A secondary battery comprising:
a first electrode;
a second electrode, the first electrode and the second electrode being stacked in an alternating manner along a stack direction; and
a separator configured to separate the first electrode from the second electrode,
wherein the separator includes:
a first separator portion located between the first electrode and the second electrode;
a second separator portion located opposite the first separator portion with respect to the first electrode; and
a connection portion connecting the first separator portion to the second separator portion and covering an end portion of the first electrode, and
wherein the connection portion has a gas vent hole having a larger length in a length direction parallel to an extension direction of the end portion of the first electrode than a width, the gas vent hole having a rounded corner.

2. The secondary battery according to claim 1,
wherein an end portion of the gas vent hole in the length direction curves inward as it goes outward in a width direction.

3. The secondary battery according to claim 1,
wherein the gas vent hole includes a plurality of gas vent holes, and the plurality of gas vent holes is arranged along the extension direction of the end portion of the first electrode.

4. The secondary battery according to claim 3,
wherein the connection portion includes a bridge portion between the plurality of gas vent holes, the bridge portion connecting the first separator portion to the second separator portion.

5. The secondary battery according to claim 4,
wherein the length of the gas vent hole with respect to the extension direction of the first electrode is larger than a length of the bridge portion with respect to the extension direction of the first electrode.

6. The secondary battery according to claim 4,
wherein a length of the bridge portion with respect to the extension direction of the first electrode is equal to or less than 1/10 of a length of the connection portion with respect to the extension direction of the first electrode.

7. The secondary battery according to claim 4,
wherein a width of a connected part of the bridge portion and the first separator portion or the second separator portion is larger than a width located between the first separator portion and the second separator portion.

8. The secondary battery according to claim 4,
wherein the bridge portion includes a space forming portion facing the first electrode and spaced apart from the first electrode to form a gas movement space therebetween.

9. The secondary battery according to claim 4, further comprising:
an end bridge portion located at an outer side with respect to an arrangement direction of the plurality of gas vent holes, and
wherein a width of the end bridge portion is larger than a width of the bridge portion.

10. The secondary battery according to claim 1,
wherein the gas vent hole is bent toward the first separator portion or the second separator portion from the end portion of the first electrode.

11. The secondary battery according to claim 1,
wherein the gas vent hole has a larger width than a thickness of the end portion of the first electrode.

12. The secondary battery according to claim 1,
wherein the gas vent hole overlaps the first electrode with respect to the stack direction such that the first electrode is exposed with respect to the stack direction.

13. The secondary battery according to claim 1,
wherein the gas vent hole is configured to be restricted from overlapping the second electrode to prevent physical contact between the first electrode and the second electrode.

14. The secondary battery according to claim 1,
wherein the secondary battery includes an accommodation portion accommodating the first electrode, the second electrode and the separator, and a side portion extending from one side of the accommodation portion and configured to be sealed, and
wherein the gas vent hole is configured to face the side portion.

15. The secondary battery according to claim 1,
wherein the connection portion is defined as a first connection portion,
wherein the first connection portion is connected to an end of the first separator portion and an end of the second separator portion adjacent to the end of the first separator portion, and
wherein the separator further includes:
a third separator portion located opposite the first separator portion with respect to the second electrode; and
a second connection portion connected to an opposite end of the second separator portion and an end of the third separator portion adjacent to the opposite end of the second separator portion.

16. An electrode stack comprising:
a first electrode;
a second electrode, the first electrode and the second electrode being stacked in an alternating manner along a stack direction;
a first separator portion located between the first electrode and the second electrode;
a second separator portion located opposite the first separator portion with respect to the first electrode; and
a connection portion connecting the first separator portion to the second separator portion and covering an end portion of the first electrode,
wherein the connection portion has a gas vent hole that allows gas to move, and overlaps any one of the first electrode and the second electrode with respect to the stack direction and is prevented from overlapping the other one.

17. The electrode stack according to claim 16,
wherein the gas vent hole has a larger length in a length direction parallel to an extension direction of the end portion of the first electrode than a width, and has a rounded corner.

18. The electrode stack according to claim 16,
wherein an end portion of the gas vent hole in the length direction curves inward as it goes outward in a width direction.

19. The electrode stack according to claim 16,
wherein the gas vent hole includes a plurality of gas vent holes, and the plurality of gas vent holes is arranged along an extension direction of the end portion of the first electrode.

20. A separator comprising:
a first separator portion configured to face a first surface of a first electrode;
a second separator portion configured to face a second surface opposite to the first surface of the first electrode; and
a connection portion configured to connect the first separator portion to the second separator portion,
wherein the connection portion includes a plurality of gas vent holes, each having a larger length in a length direction than a width, a bridge portion formed between the plurality of gas vent holes, and an end bridge portion formed outside of the plurality of gas vent holes,
wherein the length of the gas vent hole is larger than a length of the bridge portion, and
wherein a length of the end bridge portion is larger than the length of the bridge portion.
